Europäisches Patentamt

European Patent Office

Office européen des brevets

(19)

(11) Numéro de publication : **0 319 405 B1**

(12) **FASCICULE DE BREVET EUROPEEN**

(45) Date de publication du fascicule du brevet :
**01.07.92 Bulletin 92/27**

(51) Int. Cl.$^5$ : **C10M 135/04,** C07C 321/00

(21) Numéro de dépôt : **88403011.5**

(22) Date de dépôt : **30.11.88**

(54) **Compositions d'olefines polysulfurées, leur préparation et leur utilisation comme additifs pour lubrifiants.**

(30) Priorité : **02.12.87 FR 8716847**

(43) Date de publication de la demande :
**07.06.89 Bulletin 89/23**

(45) Mention de la délivrance du brevet :
**01.07.92 Bulletin 92/27**

(84) Etats contractants désignés :
**AT BE CH DE ES GB IT LI LU NL**

(56) Documents cités :
**EP-A- 0 271 368**
**FR-A- 2 404 042**
**US-A- 4 563 302**

(73) Titulaire : **INSTITUT FRANCAIS DU PETROLE**
**4, Avenue de Bois Préau**
**F-92502 Rueil-Malmaison (FR)**

(72) Inventeur : **Born, Maurice**
**72, Rue du Vieux Pont**
**F-92000 Nanterre (FR)**
Inventeur : **Briquet, Lucienne**
**26, Avenue de la République**
**F-92500 Rueil Malmaison (FR)**
Inventeur : **Lallement, Jacques**
**84, 86, Boulevard Félix Faure**
**F-93300 Aubervilliers (FR)**
Inventeur : **Parc, Guy**
**27, Rue du Château**
**F-92500 Rueil Malmaison (FR)**

EP 0 319 405 B1

Jouve, 18, rue Saint-Denis, 75001 PARIS

## Description

L'invention concerne le domaine des additifs organiques sulfurés utilisés notamment pour améliorer les propriétés extrême-pression des lubrifiants ; elle concerne plus particulièrement de nouveaux produits du type oléfines polysulfurées, leur préparation et leur utilisation comme additifs pour lubrifiants minéraux ou synthétiques.

Dans la demande de brevet français déposée le 17 octobre 1986 sous le numéro d'Enregistrement National 86/14576, le déposant a déjà décrit des compositions d'oléfines polysulfurées obtenues par un procédé comprenant :

– une étape (1) dans laquelle on fait réagir au moins un composé choisi parmi le monochlorure et le dichlorure de soufre avec au moins une monooléfine aliphatique de 2 à 5 atomes de carbone répondant à la formule $R^1-C(R^2)=CH_2$, dans laquelle $R^1$ représente l'atome d'hydrogène ou un radical alkyle de 1 à 3 atomes de carbone et $R^2$ représente l'atome l'hydrogène ou un radical méthyle, de manière à former un produit d'addition ;

– une étape (2) dans laquelle on fait réagir ledit produit d'addition avec au moins un mercaptate ou un mercaptate-polysulfure répondant à la formule générale $R^3S_xM$, dans laquelle $R^3$ représente un radical aliphatique, un radical aliphatique portant au moins un groupement fonctionnel, un radical aromatique, un radical aromatique substitué par au moins un radical aliphatique, ou un radical hétérocyclique, M représente un atome ou un groupement monovalent correspondant à une base minérale de formule MOH et x prend une valeur moyenne d'au moins 1 ; et éventuellement

– une étape (3) dans laquelle le produit de l'étape (2) est mis en contact avec une solution aqueuse de base minérale.

On a maintenant découvert qu'il était possible de préparer des compositions d'oléfines polysulfurées non plus à partir de monooléfines aliphatiques de 2 à 5 atomes de carbone, mais à partir de monooléfines aliphatiques de condensation en carbone plus élevée.

Les compositions d'oléfines polysulfurées de l'invention présentent notamment une excellente solubilité dans les huiles lubrifiantes minérales et dans les huiles lubrifiantes synthétiques (en particulier du type polyalpha-oléfines hydrogénées). Pour certaines de ces compositions, la solubilité peut même être totale. Selon leur teneur en soufre, les composittions d'oléfines polysulfurées de l'invention seront utilisables avantageusement comme additifs extrême-pression pour les huiles d'engrenages ou pour les huiles destinées au travail des métaux.

D'une manière générale, les compositions d'oléfines polysulfurées de l'invention peuvent être définies comme étant obtenues par un procédé qui comprend :

– une étape (1) dans laquelle on fait réagir au moins un composé choisi parmi le monochlorure et le dichlorure de soufre avec au moins une monooléfine aliphatique de 6 à 12 atomes de carbone et éventuellement une proportion mineure d'au moins une monooléfine aliphatique de 2 à 5 atomes de carbone, de manière à former un produit d'addition ou "adduct".

– une étape (2) dans laquelle on fait réagir, en général en milieu alcoolique, au moins un produit d'addition obtenu par une étape telle que (a) avec au moins un mercaptate et/ou un mercaptate-polysulfure répondant à la formule générale $R^3S_xM$, dans laquelle $R^3$ représente un radical aliphatique, renfermant par exemple de 1 à 14 atomes de carbone, ce radical aliphatique pouvant comporter au moins un groupement fonctionnel (par exemple au moins un groupe hydroxyle) ; un radical aromatique, éventuellement substitué par un ou plusieurs radicaux aliphatiques et renfermant par exemple de 6 à 14 atomes de carbone ; ou un radical hétérocyclique renfermant au moins un hétéroatome choisi parmi l'azote, le soufre et l'oxygène ; M représente un atome ou un groupement monovalent correspondant à une base minérale de formule générale MOH ; et x prend une valeur moyenne d'au moins 1 et pouvant aller par exemple jusqu'à environ 7 ; et éventuellement

– une étape (3) dans laquelle le produit de l'étape (2) est mis en contact avec une solution aqueuse alcaline.

La monooléfine aliphatique de 6 à 12 atomes de carbone mise en jeu dans l'étape (1) répond plus particulièrement à la formule générale $R^1-C(R^2) = C(R^3)-R^4$ dans laquelle $R^1$, $R^2$, $R^3$ et $R^4$ représentent chacun un atome d'hydrogène ou un radical alkyle de 1 à 10 atomes de carbone ; ce peut être par exemple un héxène, du dipropylène, un heptène, un octène, du diisobutylène, un nonène, du tripropylène, un décène, un undécène, un dodécène, du tétrapropylène ou du tri-isobutylène. On peut mettre en jeu deux ou plusieurs monooléfines telles que celles mentionnées ci-dessus. On peut citer par exemple les coupes oléfiniques obtenues par dimérisation du propylène (procédé "DIMERSOL") et contenant une proportion prépondérante d'hexènes.

La monooléfine aliphatique de 2 à 5 atomes de carbone que l'on peut utiliser, en proportion mineure, conjointement à la précédente peut répondre plus particulièrement à une formule du type $R^5-C(R^6) = C(R^7)-R^8$, dans laquelle $R^5$, $R^6$, $R^7$ et $R^8$ représentent chacun l'atome d'hydrogène ou un radical alkyle de 1 à 3 atomes

2

de carbone ; ce sera le plus souvent l'isobutène.

La monooléfine (ou le mélange de monooléfines) est utilisée plus particulièrement à raison de 1,5 à 2,5 moles par mole de mono- et/ou de dichlorure de soufre. Le mono et/ou le dichlorure de soufre liquide est généralement introduit dans l'oléfine ou le mélange d'oléfines à 20-80°C, plus spécifiquement à 30-50°C.

Le produit d'addition, ou "adduct", obtenu à l'issue de l'étape (1) consiste en un mélange de composés sulfurés dans lequel la proportion moyenne de soufre peut être d'environ 1 à 2 atomes-gramme par mole, selon que l'on utilise au départ du dichlorure de soufre, du monochlorure de soufre ou un mélange des deux. La proportion de chlore est d'environ 1 à 2 atomes-gramme par mole de produit. Il doit être entendu que dans le cas où l'on utilise un mélange d'oléfines, le nombre de mole du produit d'addition auquel on se réfère est un nombre de mole global, tenant compte de la masse molaire moyenne du mélange d'oléfines de départ.

Dans l'étape (2), où l'on fait réagir le mercaptate et/ou le mercaptate-polysulfure de formule $R^3 S_x M$, de préférence au sein d'un mono alcool aliphatique, avec de l' "adduct" obtenu à l'issue de l'étape (1), ledit "adduct" est en général ajouté à la solution alcoolique dudit mercaptate ou mercaptate-polysulfure en une proportion telle que ledit mercaptate ou mercaptate-polysulfure représente un excès molaire d'environ 0,1 à 70 % par rapport à la stoechiométrie de 1 mole par atome-grame de chlore contenu par ledit "adduct", le milieu réactionnel étant maintenu par exemple à une température allant de -10°C à la température de reflux du solvant alcoolique mis en jeu. On peut également envisager d'ajouter la solution alcoolique de mercaptate et/ou de mercaptate polysulfure au produit d'addition tel qu'obtenu à l'issue de l'étape (1), les propriétés du produit final (la composition d'oléfine polysulfurée) étant inchangées.

Dans l'étape (2), il est également possible de mettre en jeu un mélange de deux ou plusieurs "adducts", préparés chacun selon la méthode de l'étape (1), à partir d'une monooléfine unique ou d'un mélange de monooléfines, comme il a été dit précédemment.

Les mercaptates et les mercaptate-polysulfures de formule générale $R^3\text{-}S_x M$ mis en jeu dans l'étape (2) peuvent être préparés plus particulièrement par réaction, de préférence en milieu alcoolique, d'au moins un mercaptan de formule générale $R^3SH$ avec une base minérale MOH, $R^3$ et M étant définis comme précédemment, puis éventuellement avec du soufre élémentaire (dans le cas de la préparation d'un mercaptate-polysulfure, pour lequel x a une valeur moyenne supérieure à 1 et pouvant aller par exemple jusqu'à environ 7).

Comme exemples de mercaptans de formule $R^3SH$ utilisables avantageusement pour préparer les mercaptates et mercaptate-polysulfures, on peut citer le méthylmercaptan, l'éthylmercaptan, le n-propylmercaptan, le n-butylmercaptan, l'isobutylmercaptan, le tert-butylmercaptan, le tert-nonylmercaptan, le tert-dodécyl-mercaptan, le mercaptoéthanol, le mercapto-3 propanediol-1,2, le phénylmercaptan, les tolylmercaptans, ainsi que le mercapto-2 benzimidazole, le mercapto-2 benzothiazole, le mercapto-2 benzoxazole, le mercapto-2 méthyl-1 imidazole, les mercapto-2 (et 4) pyridines, le mercapto-2 pyridinol-3, le mercapto-2 thiazoline et le mercapto-5 triazole.

La réaction entre le mercaptan et la base minérale est en général effectuée à une température de 20 à 100°C. Le milieu alcoolique peut comprendre au moins un monoalcool aliphatique renfermant par exemple de 1 à 5 atomes de carbone. On utilise le plus souvent le méthanol. Selon que la base minérale utilisée est la soude, la potasse ou l'hydroxyde d'ammonium, le produit obtenu est un mercaptate de sodium, de potassium ou d'ammonium de formule $R^3\text{-}SM$ (M représentant Na, K ou NH4).

Pour préparer un mercaptate-polysulfure, le mercaptate ainsi formé peut-être mis à réagir avec du soufre élémentaire. Dans ce cas, le soufre élémentaire mis en jeu peut être avec le mercaptate dans une proportion allant jusqu'à 10 atomes-gramme par mole. Cette réaction peut être réalisée à une température de 20-100°C.

A l'issue de l'étape (2), on obtient une composition d'oléfine(s) polysulfurée(s) qui peut être ensuite traitée, dans une étape (3) par une solution aqueuse alcaline, plus particulièrement une solution aqueuse de soude ou de potasse ayant par exemple une concentration d'environ 1 à 50 % en masse. La quantité de solution alcaline utilisée peut être par exemple de 0,1 à 5 fois la quantité massique d'oléfine polysulfurée brute à traiter.

Les compositions d'oléfines polysulfurées de l'invention présentent en générale une teneur en soufre de 20 à 65 % en masse ; celles qui renferment de 25 à 60 % en masse peuvent être avantageusement utilisées comme additifs extrême-pression pour huiles lubrifiantes.

Il est possible d'en ajuster la solubilité dans des huiles et les propriétés extrême-pression par le choix du mercaptan utilisé et de la proportion de soufre élémentaire mis en jeu par rapport audit mercaptan. Dans la plupart des cas, leur solubilité est totale.

Une première application de compositions d'oléfines polysulfurées de l'invention (en particulier celles dont la teneur en soufre est d'environ 25 à 50 % en masse) concerne plus particulièrement la formulation d'huiles destinées à la lubrification des engrenages. Les huiles de base peuvent être d'origine minérale ou synthétique. Les huiles synthétiques incluent notamment les oligomères d'oléfines tels que les tri-, tétra- et pentamères du décène-1 obtenus par oligomérisation en présence d'acides de LEWIS. D'autres $\alpha$-oléfines peuvent bien sûr être employées, par exemple les $\alpha$-oléfines en $C_6$ à $C_{14}$.

On peut encore utiliser des alkylbenzènes, tels que les mono- et dialkylbenzènes, ou encore les esters synthétiques provenant d'acides mono- ou polycarboxyliques (tels que l'acide sébacique, les acides gras, etc.) et de monoalcools ou de polyols, (tels que l'éthyl-2 hexanol, le triméthylol-propane, etc.).

Les oléfines polysulfurées considérées peuvent alors être ajoutées aux huiles lubrifiantes à des concentrations allant par exemple de 0,5 à 10 % en masse.

Ces additifs peuvent être utilisés en combinaison avec des additifs phosphorés, tels que les dialkyl- ou diaryldithiophosphates métalliques, les phosphites et les phosphates organiques.

D'autres additifs classiques peuvent être ajoutés, tels que des antioxydants, des antirouille, des passivateurs de cuivre, des antimousse, des réducteurs de frottements, dans des proportions usuelles.

Une seconde application des compositions d'oléfines polysulfurées de l'invention comme additifs extrême-pression pour lubrifiants (en particulier celles dont la teneur en soufre est supérieure à environ 50 % en masse) concerne plus particulièrement la formulation d'huiles destinées au travail des métaux (coupe, formage, etc.).

Dans cette application, la concentration d'additif utilisée est en général de 0,1 à 20 % et de préférence de 0,5 à 5 % en masse par rapport à l'huile lubrifiante. Dans cette application, d'autres additifs classiques peuvent être ajoutés, tels que des paraffines chlorées en une proportion correspondant par exemple à 2-10 % en masse de chlore par rapport à l'huile lubrifiante.

Les exemples suivants illustrent l'invention ; ils ne doivent en aucune manière être considérés comme limitatifs. L'exemple 9 est donné à titre de comparaison.

## EXEMPLE 1

Dans un réacteur de 2 l, muni d'un agitateur et d'un réfrigérant, on introduit 620,8 g (5,56 moles) de diisobutylène puis, goutte à goutte en 1 heure, on ajoute sous agitation 356,4 g de $S_2Cl_2$ (2,64 mole), en maintenant la température réactionnelle inférieure à 45°C. Après réaction, on recueille 860 g d'un produit d'addition que l'on désigne par le terme d' "adduct" (Cl = 15,4 % en masse).

Dans un second réacteur de 1 l, muni d'un réfrigérant, d'un agitateur et d'un dispositif permettant la distillation, on introduit 400 cm3 de méthanol anhydre, et 63,4 g de soude, en pastilles (1,58 mole) ; on agite jusqu'à dissolution totale de la soude puis on ajoute 142,6 g de tert-butylmercaptan (1,58 mole) et 18,8 g de soufre en fleur (0,59 at-gramme). On porte au reflux du méthanol pour favoriser la formation du polysulfure alcalin. Dans cette préparation le rapport molaire RSH/S est égal à 2,7.

Par l'intermédiaire d'une ampoule à brome, on ajoute goutte à goutte en 0,5 heure 215 g de l' "adduct" préparé précédemment.

On laisse au reflux pendant 7 heures supplémentaires, puis on distille le méthanol tout en introduisant dans le milieu un volume d'eau égal au volume d'alcool distillé.

Après élimination complète de l'alcool, le mélange est séparé par décantation ; la phase organique récupérée est ensuite traitée au reflux pendant 3 heures par une solution aqueuse de soude à 10 % en masse (125 g).

Après décantation, la phase organique récupérée est lavée deux fois avec 200 cm3 d'eau distillée, séchée sur $Na_2SO_4$ anhydre, filtrée, puis évaporée à 100°C sous pression réduite.

On recueille ainsi 310 g d'une huile jaune pâle dont les caractéristiques physico-chimiques sont indiquées dans le tableau 1 (ci-après).

## EXEMPLE 2

L'expérimentation de l'exemple 1 est reprise, mais on prépare dans le second réacteur un mercaptate-polysulfure alcalin à partir de 64,6 g de tert-butylmercaptan (0,72 mole), 28,7 g de soude en pastilles (0,718 mole), 60,58 g de soufre en fleur (1,89 at-gramme) et 200 cm3 de méthanol. Dans cet exemple, le rapport molaire RSH/S est égal à 0,38.

La réaction est poursuivie dans les conditions de l'exemple 1 en utilisant 150 g d' "adduct" diisobutylène/$S_2Cl_2$.

Après réaction et sans traitement complémentaire à la soude, on recueille 213 g d'une huile orangée dont les caractéristiques sont rassemblées dans le tableau 1 (ci-après).

## EXEMPLE 3

L'expérimentation de l'exemple 2 est reprise en substituant dans le second réacteur le tert-butylmercaptan par la même quantité molaire de méthylmercaptan (34,6 g).

Après réaction et sans traitement à la soude, on recueille 185 g d'une huile orangée dont les caractéristiques sont indiquées dans le tableau 1.

## EXEMPLE 4

L'expérimentation de l'exemple 1 est reprise en introduisant dans le premier réacteur 394,4 g d'une coupe oléfinique constituée de 85 % en mole d'hexènes et de 15 % de nonènes (coupe oléfinique obtenue par dimérisation du propylène par le procédé "DIMERSOL"). On ajoute ensuite goutte à goutte en 1 heure 304 g de $S_2Cl_2$ (2,24 mole), en maintenant la température inférieure ou égale à 30°C.

Après réaction, on recueille 662 g d'un produit d'addition que l'on désigne par le terme d' "adduct" (Cl = 23,8 % en masse).

L'expérimentation est poursuivie dans le second réacteur en utilisant 232,1 g de tert-butylmercaptan (2,58 moles), 103,2 g de soude en pastilles (2,58 moles), 236,2 g de soufre en fleur (7,37 at-grammes). Dans cet exemple, le rapport molaire RSH/S est égal à 0,35.

Après réaction et sans traitement à la soude, on recueille 624 g d'une huile jaune orangée dont les caractéristiques sont indiquées dans le tableau 1 (ci-après).

## EXEMPLE 5

L'expérimentation de l'exemple 1 est reprise en utilisant dans le premier réacteur 302 g d'une coupe oléfinique en C9 (tripropylène : 2,4 moles) et 154 g de $S_2Cl_2$ (1,14 mole).

Après réaction, on recueille 430 g d'un produit d'addition que l'on désigne par le terme d' "adduct" (Cl = 13 % en masse).

Dans un second réacteur de 1 l, on introduit 118,6 g de tert-butylmercaptan (1,32 mole), 52,7 g de soude en pastilles (1,32 mole), 141 g de soufre en fleur (4,4 at-grammes) et 600 cm3 de méthanol. Dans cet exemple, le rapport molaire RSH/S est égal à 0,3.

On ajoute ensuite au mercaptate polysulfure obtenu 300 g de l' "adduct" préparé dans le premier réacteur.

Après réaction (7 heures au reflux) et sans traitement complémentaire à la soude, on recueille 374 g d'une huile très sombre dont les caractéristiques sont indiquées dans le tableau 1 (ci-après).

## EXEMPLE 6

Dans un réacteur de 1 l, muni d'un agitateur, on introduit 173,2 g de diisobutylène (1,55 mole) dans lesquels on dissout 30,4 g d'isobutylène (0,58 mole). On introduit ensuite goutte à goutte par l'intermédiaire d'une ampoule à brome 132 g de $S_2Cl_2$ (0,98 mole), en maintenant la température réactionnelle vers 20°C.

Après réaction, on recueille 300 g d'un produit d'addition que l'on désigne par le terme d' "adduct" (Cl = 17,9 % en masse).

Dans un second réacteur de 1 l, muni d'un agitateur, d'un réfrigérant et d'un dispositif permettant la distillation, on introduit successivement 250 cm3 de méthanol, 33,3 g de soude (0,832 mole) et 74,8 g de tert-butylmercaptan (0,832 mole). Après dissolution complète, on ajoute 9,9 g de soufre en fleur (0,31 at-gramme) ; on fait bouillir une heure pour favoriser la formation du mercaptate-polysulfure alcalin. Dans cette préparation, le rapport molaire RSH/S est de 2,7.

Par l'intermédiaire d'une ampoule à brome, on introduit ensuite goutte à goutte en 0,5 heure 150 g de l' "adduct" préparé dans le réacteur précédent. On laisse réagir au reflux pendant 7 heures puis, après traitement de l'additif soufré brut, on recueille 178 g d'une huile jaune dont les caractéristiques physico-chimiques sont indiquées dans le tableau 1 (ci-après).

## EXEMPLE 7

Dans un réacteur de 1 l, contenant un mercaptate-polysulfure alcalin obtenu à partir de 62,4 g de tert-butylmercaptan (0,69 mole), 27,7 g de soude (0,69 mole), 74 g de soufre en fleur (2,31 at-grammes) et 200 cm3 de méthanol, on introduit goutte à goutte en 0,5 h 150 g d'un mélange constitué de 120 g d' "adduct" diisobutylène/$S_2Cl_2$ préparé dans l'exemple 1, et de 30 g d' "adduct" tripropylène/$S_2Cl_2$ préparé dans l'exemple 5. Dans cet exemple le rapport molaire RSH/S est égal à 0,3 et la teneur en chlore du mélange des "adduct" est égale à 14,9 % en masse.

Après réaction, et sans traitement complémentaire à la soude, on recueille 208 g d'une huile orangée dont les caractéristiques physico-chimiques sont fournies dans le tableau 1 (ci-après).

EXEMPLE 8

L'expérimentation de l'exemple 7 est reprise en introduisant la solution de mercaptate-polysulfure alcalin dans le mélange halogéné. Après réaction, on recueille 210 g d'une huile orangée dont les caractéristiques physico-chimiques, indiquées dans le tableau 1, sont très voisines de celles du produit obtenu dans l'expérimentation de l'exemple 7.

TABLEAU 1

| Additif de l'exemple | RSH/S molaire | RSH/NaOH molaire | NaOH/Cl molaire | Teneur en chlore de l'additif (ppm) | Teneur en S de l'additif (% masse) | Viscosité 100°C $(mm^2/s)$ | Solubilité dans SAE 90 | |
|---|---|---|---|---|---|---|---|---|
| | | | | | | | Huile minérale | PAO |
| 1 | 2.70 | 1 | 1.69 | 112 | 28.6 | 2.8 | Totale | Totale |
| 2 | 0.38 | 1 | 1.10 | 227 | 43.4 | 4.5 | Totale | Totale |
| 3 | 0.38 | 1 | 1.10 | 205 | 48.2 | 5.8 | Totale | — |
| 4 | 0.35 | 1 | 1.10 | 187 | 51.2 | 6.2 | Totale | Totale |
| 5 | 0.30 | 1 | 1.20 | 265 | 46.0 | 3.8 | Totale | Totale |
| 6 | 2.70 | 1 | 1.32 | 202 | 31.1 | 2.5 | Totale | Totale |
| 7 | 0.30 | 1 | 1.10 | 154 | 44.5 | 4.4 | Totale | Totale |
| 8 | 0.30 | 1 | 1.10 | 158 | 44.6 | 4.4 | Totale | Totale |

EP 0 319 405 B1

EXEMPLE 9 (Comparatif)

On répète l'exemple 1 en remplaçant, dans la préparation de l'adduct, le diisobutylène par de l'isobutylène en mêmes proportions molaires que dans l'exemple 1 : 0,71 mole soit 40 g.

On a utilisé 47,4 g de $S_2Cl_2$ (soit 0,35 mole).

Par ailleurs, on répète, dans le second réacteur, l'expérimentation de l'exemple 2. Le rapport molaire RSH/S est aussi de 0,38. On poursuit la réaction comme dans l'exemple 1, en utilisant 83 g de l'adduct isobutène/$S_2Cl_2$ préparé comme décrit ci-dessus.

Les caractéristiques physico-chimiques du produit obtenu sont les suivantes :

S % en masse : 57,5 %

Cl % en masse : 170 ppm

Viscosité à 100° C : 11 mm²/s

Dans un essai de solubilité à 20 % en masse dans une huile SAE 90 de type polyalphaoléfine hydrogénée, on observe que l'huile additionnée est trouble. L'additif considéré n'est pas totalement soluble.

SOLUBILITE DES ADDITIFS SELON L'INVENTION DANS LES HUILES LUBRIFIANTES

L'une des principales caractéristiques des additifs selon l'invention concerne leur remarquable miscibilité aux huiles lubrifiantes, tant minérales que synthétiques, notamment les polyalphaoléfines hydrogénées (PAO), malgré leur teneur en soufre élevée.

MESURE DE L'ACTIVITE CORROSIVE DES ADDITIFS SELON L'INVENTION

On a réalisé des essais de corrosion à la lame de cuivre selon la norme ASTM D 130 (NF M07-015) à partir d'une huile minérale SAE 90 contenant les additifs de l'invention en une proportion correspondant à une concentration en soufre de l'huile de 2% en masse ; les résultats obtenus sont rassemblés dans le tableau 2.

Pour la formulation des huiles d'engrenages d'automobiles, on utilisera de préférence les additifs conduisant à une cotation inférieure ou égale à 3 (en particulier à 121°C). Pour la formulation d'huiles de coupe des métaux ferreux, les additifs conduisant à des cotations de corrosion élevées seront préférés.

EVALUATION DES PROPRIETES EXTREME-PRESSION DES ADDITIFS SELON L'INVENTION

On a réalisé des essais mettant en évidence les propriétés extrême-pression des additifs selon l'invention, d'une part, dans des formulations du type huiles d'engrenages et, d'autre part, dans des formulations du type huiles de travail des métaux (ferreux).

a) Les additifs des exemple 1 et 6 ont été étudiés à l'aide d'une machine 4 billes selon les procédures ASTM D 2783 et ASTM D 2266, à la concentration de 0,69 % en masse de soufre dans une huile minérale SAE 90 ; les résultats obtenus ont été rassemblés dans le tableau 3.

On constate que les propriétés extrême-pression des additifs selon l'invention sont très élevées et permettent à ce titre leur emploi pour la formulation d'huiles pour engrenages (industriels et/ou d'automobiles).

b) On a réalisé des essais mettant en évidence les propriétés extrême-pression des additifs, préparés dans les exemples 2 et 5, dans des formulations du type huile de coupe des métaux ferreux, au moyen d'une machine 4 billes selon la procédure ASTM D 2783.

Les formulations lubrifiantes étaient constituées d'huile minérale 100 Neutral Solvent renfermant 3 % en masse de chlore sous forme de paraffine chlorée, et 1 % en masse de soufre sous forme d'additifs soufrés des exemples 2 et 5. Les résultats obtenus sont rassemblés dans le tableau 4.

Les résultats obtenus montrent que les additifs de l'invention, conduisent à des performances extrême-pression très élevées, d'où leur intérêt pour la formulation d'huiles de travail des métaux.

TABLEAU 2

| Additif de l'exemple | [S] dans l'additif (% masse) | % d'additif dans l'huile minérale (% masse) | 3 heures à | |
|---|---|---|---|---|
| | | | 100°C | 121°C |
| 1 | 28.6 | 7.00 | 1 a | 2 a |
| 2 | 43.4 | 4.60 | 4 c | - |
| 3 | 48.2 | 4.15 | 4 c | - |
| 4 | 51.2 | 3.90 | 4 c | - |
| 5 | 46.0 | 4.35 | 4 c | - |
| 6 | 31.1 | 6.40 | 1 a | 2 a |
| 7 | 44.5 | 4.50 | 4 c | - |
| 8 | 44.6 | 4.50 | 4 c | - |

TABLEAU 3

| Additif de l'exemple | % masse additif dans SAE 90 | Indice Charge/usure | | Charge de soudure | | Ø d'empreinte des billes 1 h sous 40 kgf (392.4 N) (mm) |
|---|---|---|---|---|---|---|
| | | (Kgf) | (N) | (Kgf) | (N) | |
| Sans | - | 22.2 | 217.8 | 160 | 1569.6 | 0.80 |
| 1 | 2.41 | 62.0 | 608.3 | 400 | 3924.0 | 0.65 |
| 6 | 2.22 | 65.2 | 639.7 | 400 | 3924.0 | 0.61 |

TABLEAU 4

| Paraffine chlorée (% masse) | Additif de l' exemple | S % masse de l'additif soufré | % masse de l'additif dans l'huile | ESSAIS 4 BILLES E.P. | | | | | |
|---|---|---|---|---|---|---|---|---|---|
| | | | | Indice Charge/usure | | Charge avant grippage | | Charge de soudure | |
| | | | | (Kgf) | (N) | (Kgf) | (N) | (Kgf) | (N) |
| Sans | Sans | - | - | 21.4 | 209.9 | 50 | 490.5 | 116 | 1138.0 |
| 4.62 | Sans | - | - | 38.1 | 373.8 | 80 | 784.8 | 200 | 1962 |
| Sans | 2 | 43.4 | 2.3 | 45.2 | 413.1 | 80 | 734.8 | 315 | 3090.1 |
| 4.62 | 2 | 43.4 | 2.3 | 96.2 | 883.1 | 100 | 981.0 | 620 | 6082.2 |
| Sans | 5 | 46.0 | 2.2 | 47.1 | 432.3 | 80 | 784.8 | 315 | 3090.1 |
| 4.62 | 5 | 46.0 | 2.2 | 98.7 | 906.1 | 100 | 981.0 | 620 | 6082.2 |

EP 0 319 405 B1

EP 0 319 405 B1

**Revendications**

1. Composition d'oléfine polysulfurée caractérisée en ce qu'elle est obtenue par un procédé qui comprend :
une étape (1) dans laquelle on fait réagir au moins un composé choisi parmi le monochlorure et la dichlorure de soufre avec au moins une monooléfine aliphatique de 6 à 12 atomes de carbone , de manière à former un produit d'addition ; et
une étape (2) dans laquelle on fait réagir au moins un produit d'addition tel qu'obtenu à l'issue de l'étape (1) avec au moins un mercaptate ou un mercaptate-polysulfure répondant à la formule générale $R^3S_xM$, dans laquelle $R^3$ représente un radical aliphatique, un radical aliphatique portant au moins un groupement fonctionnel, un radical aromatique, un radical aromatique substitué par au moins un radical aliphatique, ou un radical hétérocyclique, M représente un atome ou un groupement monovalent correspondant à une base minérale de formule MOH et x prend une valeur moyenne d'au moins 1.

2. Composition selon la revendication 1, caractérisée en ce que, dans l'étape (1), ladite monooléfine est mise en jeu en mélange avec une proportion mineure d'au moins une monooléfine aliphatique de 2 à 5 atomes de carbone.

3. Composition selon la revendication 1 ou 2, caractérisée en ce que, dans l'étape (1), la (ou les) monooléfine(s) aliphatique(s) sont mise(s) en jeu à raison de 1,5 à 2,5 moles par mole de mono- et/ou de dichlorure de soufre, et la réaction est effectuée à une température de 20 à 80°C.

4. Composition selon l'une des revendications 1 à 3, caractérisée en ce que, dans la formule du mercaptate ou du mercaptate-polysulfure $R^3S_xM$ mis en jeu dans l'étape (2), $R^3$ représente un radical aliphatique de 1 à 14 atomes de carbone, un radical aliphatique portant au moins un groupe hydroxyle, un radical aromatique, éventuellement substitué par au moins un radical aliphatique, de 6 à 14 atomes de carbone, ou un radical hétérocyclique renfermant au moins un hétéro-atome choisi parmi l'azote, le soufre et l'oxygène, M représente l'atome de sodium ou de potassium ou le groupement ammonium et x prend une valeur moyenne allant jusqu'à environ 7.

5. Composition selon l'une des revendications 1 à 4, caractérisée en ce que dans l'étape (2), la réaction est réalisée au sein d'un monoalcool aliphatique, ledit mercaptate ou mercaptate-polysulfure est mis en jeu sous un excès molaire d'environ 0,1 à 70 % par rapport à la stoechiométrie de 1 mole par atome-gramme de chlore contenu par ledit produit d'addition et le milieu réactionnel est maintenu à une température allant de -10°C à la température de reflux dudit monoalcool.

6. Composition selon l'une des revendications 1 à 5, caractérisée en ce que le mercaptate répondant à la formule générale $R^3S_xM$ où x prend une valeur substantiellement égale à 1, mis en jeu dans l'étape (2) est obtenu par un procédé dans lequel on fait réagir au moins un mercaptan de formule générale $R^3SH$ avec une base minérale MOH.

7. Composition selon l'une des revendications 1 à 5, caractérisée en ce que le mercaptate-polysulfure répondant à la formule générale $R^3S_xM$ où x prend une valeur moyenne supérieure à 1, mis en jeu dans l'étape (2) est obtenu par un procédé dans lequel on fait réagir au moins un mercaptan de formule générale $R^3SH$ avec une base minérale MOH, puis avec une quantité appropriée de soufre élémentaire.

8. Composition selon la revendication 7, caractérisée en ce que l'on met en jeu jusqu'à environ 10 atomes-grammes de soufre élémentaire par mole de mercaptan.

9. Composition selon l'une des revendications 6 à 8, caractérisée en ce que ladite base minérale est la soude, la potasse ou l'hydroxyde d'ammonium et la réaction est effectué au sein d'un monoalcool aliphatique de 1 à 5 atomes de carbone, à une température de 20 à 100°C.

10. Composition selon l'une des revendications 1 à 9, caractérisée en ce que dans l'étape (2) le produit d'addition obtenu à l'issue de l'étape (1) est ajouté à une solution dudit mercaptate ou dudit mercaptate-polysulfure dans un monoalcool aliphatique.

11. Composition selon l'une des revendications 1 à 9, caractérisée en ce que dans l'étape (2) on ajoute ledit mercaptate ou ledit mercaptate-polysulfure, en solution dans un monoalcool aliphatique, au produit d'addition obtenu à l'issue de l'étape (1).

12. Composition selon l'une des revendications 1 à 11, caractérisée en ce que dans l'étape (2) on met en jeu un mélange de deux ou plusieurs produits d'addition issus chacun d'une étape telle que l'étape (1), chacun à partir d'une ou de plusieurs monooléfines.

13. Composition selon l'une des revendications 1 à 12, caractérisée en ce que son procédé d'obtention comprend en outre une étape (3) dans laquelle le produit obtenu à l'issue de l'étape (2) est mis en contact avec une solution aqueuse de base minérale.

14. Composition selon la revendication 13, caractérisée en ce que, dans l'étape (3), on met en jeu une

11

solution aqueuse de soude ou de potasse ayant une concentration de 0,1 à 50 % en masse, en une quantité de 0,1 à 5 fois la quantité massique de produit résultant de l'étape (2).

15. Procédé de préparation d'une composition d'oléfine polysulfurée tel que défini dans l'une quelconque des revendications 1 à 14.

16. Utilisation d'une composition d'oléfine polysulfurée selon l'une des revendications 1 à 14, comme additif pour huile d'engrenages, dans laquelle ladite composition est ajoutée à raison de 0,5 à 10 % en masse dans une huile lubrifiante minérale ou synthétique.

17. Utilisation d'une composition d'oléfine polysulfurée selon l'une des revendications de 1 à 14 comme additif dans une huile destinée au travail des métaux, dans laquelle ladite composition est ajoutée à raison d'environ 0,1 à 20 % en masse par rapport à l'huile.

## Claims

1. Polysulfurized olefin composition characterized in that it is obtained by a process comprising:
a step (1) of reacting at least one compound chosen from sulfur monochloride and dichloride with at least one aliphatic monoolefin having 6 to 12 carbon atoms, so as to form an addition product; and
a step (2) of reacting at least one addition product as obtained at the end of step (1) with at least one mercaptate or mercaptate-polysulfide of the general formula $R^3 S_x M$, in which $R^3$ represents an aliphatic radical, an aliphatic radical with at least one functional group, an aromatic radical, an aromatic radical substituted with at least one aliphatic radical;or a heterocyclic radical, M represents a monovalent atom or group corresponding to a mineral base of the formula MOH and x has an average value of at least 1.

2. Composition according to claim 1, characterized in that in step (1), said monoolefin is mixed with a minor proportion of at least one aliphatic monoolefin with 2 to 5 carbon atoms.

3. Composition according to claim 1 or 2, characterized in that, in step (1), the aliphatic monoolefin(s) is used in a proportion of 1.5 to 2.5 moles per mole of sulfur mono- and/or dichloride and the reaction is carried out at a temperature of 20 to 80°C.

4. Composition according to one of claims 1 to 3, characterized in that, in the mercaptate or mercaptate-polysulfide formula $R^3S_xM$ used in step (2), $R^3$ represents an aliphatic radical with 1 to 14 carbon atoms, an aliphatic radical with at least one hydroxyl group, an aromatic radical, possibly substituted by at least one aliphatic radical with 6 to 14 carbon atoms, or a heterocyclic radical containing at least one heteroatom chosen from nitrogen, sulfur and oxygen, M represents a sodium or potassium atom or an ammonium group and x has an average value of up to 7.

5. Composition according to one of claims 1 to 4, characterized in that, in step (2), the reaction is carried out within an aliphatic monoalcohol, said mercaptate or mercaptate-polysulfide is used in a molar excess of about 0.1 to 70 % with reference to the stoichiometry of 1 mole per gram-atom of chlorine contained in said addition product and the reaction medium is maintained at a temperature of -10°C to the reflux temperature of said monoalcohol.

6. Composition according to one of claims 1 to 5, characterized in that the mercaptate used in step (2), having the general formula $R^3S_xM$ in which x has a value substantially equal to 1, is obtained by a process in which at least one mercaptan having the general formula $R^3SH$ is reacted with a MOH mineral base.

7. Composition according to one of claims 1 to 5, characterized in that the mercaptate-polysulfide used in step (2), having the general formula $R^3S_xM$ in which x has an average value greater than 1, is obtained by a process in which at least one mercaptan having the general formula $R^3SH$ is reacted with a MOH mineral base, then with an appropriate quantity of elemental sulfur.

8. Composition according to claim 7, characterized in that up to about 10 gram-atoms of elemental sulfur per mole of mercaptan are used.

9. Composition according to one of claims 6 to 8, characterized in that said mineral base is soda, potash or ammonium hydroxide and the reaction is carried out within an aliphatic monoalcohol with 1 to 5 carbon atoms, at a temperature of 20 to 100°C.

10. Composition according to one of claims 1 to 9, characterized in that in step (2), the addition product obtained at the end of step (1) is added to a solution of said mercaptate or said mercaptate-polysulfide in an aliphatic monoalcohol.

11. Composition according to one of claims 1 to 9, characterized in that, in step (2), said mercaptate or said mercaptate-polysulfide, in solution in an aliphatic monoalcohol, is added to the addition product obtained at the end of step (1).

12. Composition according to one of claims 1 to 11, characterized in that, in step (2), a mixture of two or more addition products is used, each resulting from a step such as step (1), each from one or more monoolefins.

13. Composition according to one of claims 1 to 12, characterized in that the process for obtaining it also includes a step (3) of contacting the product obtained at the end of step (2) with an aqueous solution of a mineral base.

14. Composition according to claim 13, characterized in that, in step (3), an aqueous soda or potash solution with a concentration of 0.1 to 50 % mass, is used with a quantity of 0.1 to 5 times the mass quantity of the product resulting from step (2).

15. A process for preparing a polysulfurized olefin composition as defined in any one of claims 1 to 14.

16. The use of a polysulfurized olefin composition according to one of claims 1 to 14, as an additive for a gearing oil, wherein said composition is added in a proportion of 0.5 to 10% in mass in a mineral or synthetic lubricating oil.

17. The use of a polysulfurized olefin composition according to one of claims 1 to 14, as an additive for a metal-working oil, wherein said composition is added in a proportion of 0.1 to 20% in mass with repect to the oil.

## Patentansprüche

1. Polysulfurierte Olefin-Zusammensetzung, dadurch gekennzeichnet, daß sie folgendermaßen erhältlich ist:
in einer ersten Verfahrensstufe (1) läßt man zumindest eine Verbindung, die der Gruppe angehört, die aus Schwefelmonochlorid und Schwefeldichlorid besteht, mit zumindest einem aliphatischen Monoolefin mit 6 bis 12 Kohlenstoffatomen reagieren, wobei ein Additionsprodukt entsteht und daß man
in einer zweiten Verfahrensstufe (2) zumindest eines der vorgenannten gemäß Verfahrensstufe (1) erhaltenen Additionsprodukte mit zumindest einem Merkaptat oder $R^3S_xM$ entspricht, in welcher $R^3$ einen aliphatischen Rest, einen aliphatischen Rest mit zumindest einer funktionellen Gruppe, einen aromatischen Rest, einen zumindest mit einem aliphatischen Rest substituierten aromtischen Rest oder einen heterozyklischen Rest, M ein Atom oder eine einwertige Gruppierung, die einer anorganischen Base der Formel MOH entspricht und x einen mittleren Wert von zumindest 1 bedeutet, reagieren läßt.

2. Olefinzusammensetzung nach Anspruch 1, dadurch gekennzeichnet, daß es dadurch erhältlich ist, daß man in der Verfahrensstufe (1) das genannte Monoolefin im Gemisch mit einer geringeren Menge zumindest eines aliphatischen Monoolefins mit 2 bis 5 Kohlenstoffatomen reagieren läßt.

3. Olefinzusammensetzung nach Anspruch 1 - 2, dadurch gekennzeichnet, daß es dadurch erhältlich ist, daß man in der Verfahrensstufe (1),das oder die aliphatischen Monoolefine in einem Verhältnis von 1,5 bis 2,5 Molen pro Mol Schwefelmonochlorid und/oder Schwefeldichlorid bei einer Temperatur von 20 bis 80 °C reagieren läßt.

4. Olefin-Zusammensetzung nach Anspruch 1 bis 3, dadurch gekennzeichnet, daß in der Formel $R^3S_xM$ des in der Verfahrensstufe (2) eingesetzten Merkaptat-Polysulfids $R^3$ einen aliphatischen Rest mit 1 bis 14 Kohlenstoffatomen, einen aliphatischen Rest der zumindest eine Hydroxylgruppe aufweist, einen aromatischen Rest, der gegebenenfalls mit zumindest einem aliphatischen Rest, der 6 bis 14 Kohlenstoffatome aufweist, substituiert ist oder einen heterozyklischen Rest,der zumindest ein Hetero-Atom der Gruppe Stickstoff, Schwefel und Sauerstoff aufweist, M ein Natriumatom, ein Kaliumatom oder die Ammoniumgruppe und x einen mittleren Wert bis zu etwa 7, bedeutet.

5. Olefin-Zusammensetzung nach einem der Ansprüche 1 bis 4, dadurch gekennzeichnet, daß man in der Verfahrensstufe (2) die Umsetzung in einem aliphatischen Monoalkohol durchführt, wobei man das Merkaptat oder das Merkaptat-Polysulfid mit einem molaren Oberschuß von etwa 0,1 bis 70 %,bezogen auf die Stoechiometrie eines Mols pro Gramm-Atom Chlor, das im genannten Additionsprodukt enthalten ist, einsetzt, wobei man das Reaktionsmedium auf einer Temperatur hält, die 10°C unterhalb der Siedetemperatur des genannten Monoalkohols liegt.

6. Olefin-Zusammensetzung nach Ansprüchen 1 bis 5, dadurch gekennzeichnet, daß man das Merkaptat der allgemeinen Formel $R^3S_xM$, bei dem x einen Wert von im wesentlichen 1 bedeutet und das in der Verfahrensstufe (2) eingesetzt wird, dadurch erhalten wurde, daß man zumindest ein Merkaptan der allgemeinen Formel $R^3SH$ mit einer anorganischen Base (anorganisches Hydroxid) umsetzt.

7. Olefin-Zusammensetzung nach einem der Ansprüche 1 bis 5, dadurch gekennzeichnet, daß man das Merkaptat-Polysulfid, das der allgemeinen Formel $R^3S_xM$, in welcher x einen mittleren Wert von oberhalb 1 bedeutet, entspricht, und das in der Verfahrensstufe (2) eingesetzt wird, dadurch erhalten wurde, daß man zumindest ein Merkaptan der allgemeinen Formel $R^3SH$ mit einer anorganichen Base MOH (anorganisches Hydroxid) und sodann mit einer angemessenen Menge an elementarem Schwefel umsetzt.

8. Olefin-Zusammensetzung nach Anspruch 7, dadurch gekennzeichnet, daß man etwa 10g-Atome an elementarem Schwefel pro Mol Merkaptan einsetzt.

9. Olefin-Zusammensetzung nach Ansprüchen 6 bis 8, dadurch gekennzeichnet, daß die genannte mineralische Base aus Soda, Pottasche oder Ammoniumhydroxyd besteht und daß man die Reaktion in einem aliphatischen Monoalkohol mit 1 bis 5 Kohlenstoffatomen bei einer Temperatur von 20 bis 100°C durchführt.

10. Olefin-Zusammensetzung nach Ansprüchen 1 bis 9, dadurch gekennzeichnet, daß man das in der Verfahrensstufe (1) erhaltene Produkt bei der Verfahrensstufe (2) einer Lösung des genannten Merkaptats oder des genannten Merkaptat-Polysulfids in einem aliphatischen Monoalkohol zugibt.

11. Olefin-Zusammensetzung nach Ansprüchen 1 bis 9, dadurch gekennzeichnet, daß man in der Verfahrensstufe (2) das genannte Merkaptat oder das genannte Merkaptat-Polysulfid, jeweils in einem aliphatischen Monoalkohol gelöst, dem Additionsprodukt, das man gemäß Verfahrensstufe (1) erhalten hat, hinzugibt.

12. Olefin-Zusammensetzung gemäß Ansprüchen 1 bis 11, dadurch gekennzeichnet, daß man in der Verfahrensstufe (2) ein Gemisch von zwei oder mehreren Additonsprodukten, die man jeweils in einer der Verfahrensstufe (1) entsprechenden Verfahrensstufe, jeweils ausgehend von einem oder mehreren Monoolefinen gewonnen hat, einsetzt.

13. Olefin-Zusammensetzung nach einem der Ansprüche 1 bis 12, dadurch gekennzeichnet, daß sie dadurch erhältlich ist, daß man ihrem Herstellungsverfahren eine dritte Verfahrensstufe (3) anfügt, in welcher man das in der Verfahrensstufe (2) erhaltene Produkt in Kontakt mit einer wässrigen Lösung einer anorganischen Base bringt.

14. Olefin Zusammensetzung nach Anspruch 13, dadurch gekennzeichnet, daß man in der Verfahrensstufe (3) eine wässrige lösung von Soda oder Pottasche mit einer Konzentration von 0,1 bis 50 Gew. % mit einer 0,1 bis 5-fachen Gewichtsmenge des Produkts der Verfahrensstufe (2) zusammenbringt.

15. Verfahren zur Herstellung von polysulfurierten Olefin-Zusammensetzungen, wie dies in einem der Ansprüche 1 bis 14 geoffenbart ist.

16. Verwendung der polysulfurierten Olefin-Zusammensetzungen nach Anspruch 1 bis 14 als Additiv für Getriebeöle, wobei die genannte Zusammensetzung in einem Verhältnis von 0,5 bis 10 Masse-% einem natürlichen (mineralischen) oder synthetischen Schmieröl zugesetzt wird.

17. Verwendung der polysulfurierten Olefin-Zusammensetzungen nach Anspruch 1 bis 14 als additiv in einem Öl, das bei der Metallbearbeitung eingesetzt wird, wobei die genannte Komposition in einem Verhältnis von ungefähr 0,1 bis 20 Masse-% bezogen auf das Öl, eingesetzt wird.